# EUROPEAN PATENT APPLICATION

(11) **EP 1 407 975 A2**
(43) Date of publication of application: **14.04.2004**
(21) Application number: 03078949.9
(22) Date of filing: 02.08.2000
(51) Int. Cl.: B65D 41/04, B29C 70/80, C08K 3/34

(54) **Multi-layer plastic closure with barrier properties**

(30) Priority: 01.09.1999 US 388113
(62) Divisional of application: 00306568.7
(71) Applicant: OWENS-ILLINOIS CLOSURE INC., Toledo Ohio 43666 (US)
(72) Inventor: Riffer, David B., Perrysberg, OH 43551 (US)
(74) Representative: Mercer, Christopher Paul

(57) **Abstract**

A plastic closure that comprises a closure body having a base wall (30) with a peripheral skirt (32) with threads (34) on the skirt for securing the closure to a container. The closure base wall (30) consists essentially of a multiplicity of layers of a matrix polymer material such as PP alternating with a multiplicity of layers of a montmorillonite clay particles comprising barrier material such as EVOH, nylon or blends of nylon and EVOH to resist transmission of gas, water vapor and/or flavorants through the closure.

## Description

The present invention is directed to plastic closures for beverage, food. juice, pharmaceutical and like applications, and more particularly to an improved process for manufacturing closures resistant to transmission of gases, water vapor and/or flavorants (flavor scalping).

### Background and Objects of the Invention

It is conventional practice to provide a plastic closure for a container that comprises a base wall and a peripheral skirt with internal means, such as an internal thread, for fastening the closure to a container finish. A flange or lip may extend inwardly from the closure base wall for sealing engagement with the container finish, as disclosed for example in U.S. Patent 5,320,236. Alternatively, a liner may be positioned on the interior surface of the closure base wall for sealing engagement with the container finish. For example, U.S. Patent 4,984,703 discloses a plastic closure with a sealing liner compression molded in situ onto the interior of the cap base. The sealing liner comprises a blend of ethylene vinyl acetate (EVA) and a thermoplastic elastomeric material such as olefin or styrene-butadiene-styrene. U.S. Patent 5,451,360 discloses a method and apparatus for compression molding the liner in situ within the closure bodies.

Although the closures and methods of manufacture disclosed in the noted patents address problems theretofore extant in the art, further improvements remain desirable. For example, although the closure lip or liner provides good sealing against the container finish when the closure is fastened to the container, the closure body and/or liner typical in the prior art does not provide an acceptable barrier against transmission of gases, such as oxygen and carbon dioxide, that can deleteriously affect the product within the container. It has heretofore been proposed to employ a barrier material such as ethylene vinyl alcohol (EVOH) as a transmission barrier material in the liner or the closure body. However, materials of this character tend to be expensive and brittle, and are not well suited to function as a seal. Furthermore, processes for incorporation of such barrier materials in the closures and/or liners of the prior art tend to be unduly expensive, incorporating multiple process steps and/or components.

It is therefore a general object of the present invention to provide a plastic closure, with or without a liner, that combines the functions of a seal for engagement with the container sealing surface and an improved barrier against gas transmission, flavor loss (flavor scalping) and/or water vapor permeation. Another and more specific object of the present invention is to provide a closure of the described character that is of readily moldable and inexpensive composition. Yet another object of the present invention is to provide a method of fabricating such a closure. A further object of the present invention is to provide a closure, and a method of manufacture, that produces a decorative random swirl pattern or effect in the closure body, which may be of differing colors for enhanced decorative effect.

### Summary of the Invention

A plastic closure in accordance with one aspect of the present invention comprises a closure body having a base wall and a peripheral skirt with means such as an internal thread on the skirt for securing the closure to a container. At least the base wall of the closure body consists essentially of a multiplicity of alternating layers of a matrix polymer material and one or more barrier polymer materials to resist transmission of gases, water vapor and flavorants through the closure body. The closure in the preferred embodiment of the invention is compression molded. A compatibilizer preferably is included to promote adhesive bonding between materials of different polarities. A lubricant may also be included to achieve desired removal torque.

The "matrix" polymer material is a thermoplastic polymer. Typical thermoplastic polymers used for the closure body are those classified as polyolefins, polyesters, polyamides and styrenic based polymers. Two major classes of polyolefin polymers used for the closure body are polyethylene and polypropylene. Polyethylene polymers can be classified as high density, medium density and low density homopolymers, or high density, medium density, low density and liner lower density copolymers, in which the comonomer is usually one or more of the family of 1-alkene molecules such as 1-butene, 1-hexene, 1-octene or similar liner alkenes, or cyclic alkenes such as norborene. Examples of polyethylenes are Paxon's AD60-007 high density homopolymer, Phillips 66's MARLEX C590 high density copolymer with hexene comonomer, or Phillips 66's MARLEX 5502BN high density copolymer with hexene comonomer. Ticona's TOPAS 6007 is a copolymer of ethylene and norborene monomers, and is also known in the art as a cyclic olefin copolymer (COC). Blends of the above classes of polyethylenes can also be utilized. Polypropylene polymers used for the closure body can be those classified as homopolymers, random copolymers and impact modified copolymers, or blends of various classes of polypropylenes can be used. Ethylene is typically the comonomer for random polypropylene copolymers and polypropylene impact copolymers, usually incorporating a tough rubber-like discontinuous phase such as ethylene-propylene rubber that can either be polymerized in-situ or in a series of polymerization reactors, or can be physically incorporated in a post-reactor processing step. Examples of polypropylene polymers are Phillips-Sumika's MARLEX HGH020-06 or HBL050-01 homopolymer, Fina's EOD95-10 random copolymer or Montell's PRO-FAX SB-912 random copolymer, and Montell's PRO-FAX 7523 impact copolymer. Blends of the aforementioned classes of polyethylenes and polypropylenes can also be utilized.

Polyesters used for the closure body can be either amorphous or semi-crystalline. Typical semi-crystalline polyesters are poly(ethylene terephthalate) and poly(butylene terephthalate). Likewise, polyesters can be glycol-modified or incorporate other comonomers such as cyclohexylenedimethylol (CHDM) and be rendered amorphous. There are two general classes of polyamides which can be used for the closure shell: those polymerized by condensation of a dibasic acid and a diamine, such as nylon 6,6 and nylon 6,12, and those polymerized by addition reaction of ring compounds that contain both acid and amine groups on the monomer, such as nylon-6, nylon-11, and nylon-12. The polyamides can also be either amorphous or semicrystalline, either of which classes can be used for the closure body. Typical classes of styrenic based polymers that can be used for the closure body may be characterized as polystyrene incorporating various comonomers such as acrylonitrile, butadiene, chlorinated ethylene, ethylene or maleic anyhdride. Examples of these various styrenic copolymers and terpolymers are: ABS, a terpolymer of acrylonitrile, butadiene and styrene; ACS, a terpolymer of acrylonitrile, chlorinated polyethylene and styrene; ASA, a terpolymer of various acrylic monomers, styrene and acrylonitrile; and SAN, a copolymer of styrene and acrylonitrile.

A "compatibilizer" is a thermoplastic that ties two other thermoplastics together by a reactive or chemical (covalent, dipole-dipole, ionic or acid-base) bond or by a non-reactive (chain entanglement) means. Examples include maleic anhydride grafted polymers or ethylene vinyl acetate grafted polymers such as Quantum Chemical's PLEXAR (trademark), Mitsui Petrochemical's ADMER (trademark) and DuPont's BYNEL (trademark) product lines, ethylene methyl acrylate, and ionomers.

A "barrier polymer material" is a thermoplastic material that has a low gas and/or water vapor transmission rate and a high barrier to odorants and essential oils. The barrier properties may be either active or passive, or both. Passive barriers include: EVOH (ethylene vinyl alcohol) such as Nippon Goshei's SOARNOL product line and Evalca's EVAL product line, nylons such as DuPont's SELAR PA, EMS's G21 and Mitsubishi Gas' MXD6 product lines, British Petroleum's BAREX acrylonitrile product line, blends of EVOH and semicrystalline or amorphous nylon, blends of EVOH and an ionomer such as SURLYN (DuPont), polypropylene/butyl rubber such as TREFSIN (Advanced Elastomer Systems) and cyclic olefin copolymers such as marketed by Ticona. Other suitable passive barrier materials are blends as disclosed in U.S. Patent Nos. 4,977,004 and 5,064,716, nanocomposites of montmorillonite (e.g., smectite) clay in EVOH and/or amorphous or semi-crystalline nylon (see U.S. Patents 4,472,538 and 5,552,469), and layered crystalline polymers such as VECTRA by Ticona. Active barrier materials include polymers used for oxygen scavenging such as nylon blended with a cobalt salt.

The closure of the present invention may be of the linerless or self-sealing type that includes integral means, such as an annular lip on the closure base wall or skirt, for sealing engagement with the finish of a container. Alternatively, the closure may include a separate liner carried by the closure base wall for sealing engagement with the container finish. It is currently preferred that the sealing element -- i.e., either the integral sealing lip or the sealing liner -- also include an additive for reducing the coefficient of friction between the closure and the sealing surface of the container. Friction reducing additives include metal stearates, microcrystalline waxes, polyethylene glycols, fatty acid esters and amides. These are known as "lubricants" in the art. The preferred lubricant is a low molecular weight fatty acid amide material that blooms to the exposed surface of the polymer material upon cooling from the melt state, thereby reducing the coefficient of friction between the closure sealing element and the container sealing surface. Examples are: primary amides with the general chemical structure R-CO-NH2, where R is an alkyl group; secondary amides with the general chemical structure R-CO-NH-R'; where R, R' are alkyl groups; secondary bis-amides with the general chemical structure R-CO-NH-A-NH-CO-R', where R, R' are alkyl groups and A is an alkylene group; and blends of the above materials such as in U.S. Patent 5,306,542. The lubricant preferably comprises about 0.1 % to 1.5 % of the total closure or liner composition by weight, most preferably about 0.5% by weight. The lubricant is preferably compounded into the matrix polymer material (along with any desired colorants) by the material manufacturer. When incorporated into the closure, the amount of lubricant and/or colorant is not included in the calculations of compositions in this application. The barrier material in the closure preferably is an amount in the range of about 2% to 50% by weight. The barrier material most preferably is provided in an amount in the range of about 6 % to 35 % by weight in the closure body, the compatibilizer material preferably is in the range of about 1 % to 20% by weight, the balance consisting of the matrix polymer.

In accordance with a second aspect of the present invention, a method of making a plastic closure comprises the steps of extruding a pellet that consists of a multiplicity of layers of a matrix polymer alternating with a multiplicity of layers of a barrier material that resists transmission of gases, water vapor and flavorants, and compression molding the pellet to form a closure in which the alternating layers in the closure base wall are oriented generally parallel to the plane of the base wall. The layers in the pellet preferably are coextruded from inputs of barrier material, matrix polymer and compatibilizer. These materials may be separately extruded, or the compatibilizer may be mixed with the barrier material, the matrix polymer or both prior to extrusion. In the preferred implementation of the invention, the layers in the pellet are coextruded from a first input consisting of barrier material, a second input consisting of a matrix polymer and a third input consisting of a compatibilizer material that promotes adhesion between the barrier and matrix layers.

### Brief Description of the Drawings

The invention, together with additional objects, features and advantages thereof, will be best understood from the following description, the appended claims and the accompanying drawings in which:
FIG. 1 is a functional block diagram of a process for fabricating compression mold charge pellets in accordance with a presently preferred embodiment of the invention;
FIG. 2 is a view similar to that of FIG. 1 but showing a modified process;
FIG. 3 is a sectioned elevational view on an enlarged scale of a plastic closure fabricated in accordance with the preferred embodiments of the invention illustrated in FIGS. 1 and 2;
FIG. 4 is an enlarged sectional view of the portion of FIG. 3 within the circle 4;
FIGS. 5, 6 and 7 are views similar to that of FIG. 3 but showing modified embodiments of the closure incorporating a sealing liner; and
FIGS. 8 and 9 are fragmentary views similar to FIG. 4 but showing modified embodiments of the invention.

### Detailed Description of Preferred Embodiments

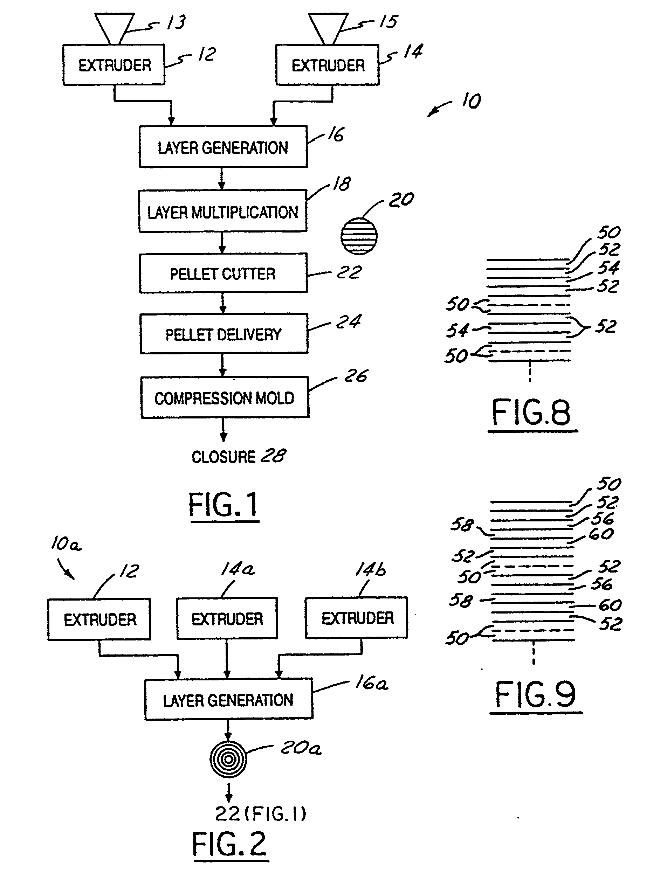

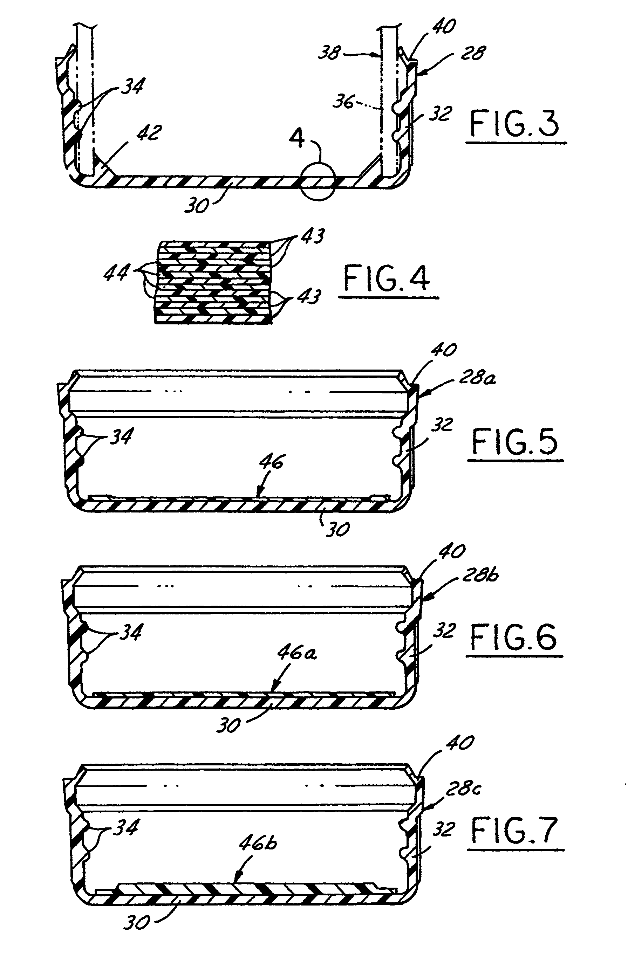

FIG. 1 illustrates a system 10 in accordance with one implementation of the invention as comprising a pair of extruders 12,14 each having an associated mixing hopper 13, 15. Extruders 12, 14 direct extrudate as first and second inputs to a layer generation device 16. Layer generation device 16 forms the respective inputs into discrete generally parallel layers, and feeds the parallel layers to a layer multiplication device 18. The output of layer multiplication device 18 is an extruded rod from which discrete charge pellets 20 are cut at 22. Pellet 20 has parallel (planar, spiral or concentric) essentially discrete alternating layers, each layer consisting of one of the input materials to layer generator 16 from extruders 12, 14. The number of layers in pellet 20 is a function of the number of stages and the construction of each stage in layer multiplication device 18. In one presently preferred implementation of the invention, layer generation device 16 and layer multiplication device 18 are as disclosed in U.S. Patent Nos. 5,094,793 and 5,628,950. Charge pellets 20 are delivered at 24 to a compression molding device 26, from which completed closures 28 (FIGS. 1 and 3) are delivered. Pellet cutter 22 and pellet delivery system 24 may be as disclosed in U.S. Patents 5,603,964 and 5,286,971. Compression mold 26 may be as disclosed in U.S. Patents 5,451,360 and 5,554,327.

FIG. 2 illustrates a presently preferred system 10a, in which the barrier polymer, the matrix polymer and the compatibilizer are fed from associated separate extruders 12, 14a, 14b to a conventional coextrusion device 16a. The resulting pellet 20a has multiple flat, spiral or coaxial layers. In a three-input system configuration as in FIG. 2, the layers of compatibilizer will be thin and disposed between each sequential layer of barrier material and matrix polymer. The system of FIG. 2 is currently preferred because less compatibilizer is employed. Suitable conventional coextrusion devices 16a are disclosed, for example, in U.S. Patent 4,522,775, and in the background discussion of U.S. Patent 5,628,950. As another modification to the embodiment of FIG. 1, barrier material can be added to the matrix polymer and compatibilizer input to extruder 14. For example, the input to extruder 14 may consist of 10% EVOH, 10% compatibilizer and 80% matrix polymer such as PP, all by weight. Extruder 12 is operated at a lower rate so that total composition remains within the ranges discussed above. Disposition of some barrier material within the thermoplastic elastomer layers further enhances the barrier properties of the material. FIG. 2 also shows a modification in which layer generation device 16a directly feeds pallet cutter 22.

For manufacture of plastic closures in accordance with the system of FIG. 1, the input to extruder 12 at hopper 13 preferably consists of one or more barrier polymers, while the input to extruder 14 at hopper 15 preferably consists essentially of one or more matrix polymers (e.g., PP) and a compatibilizer material. The matrix polymer preferably is pre-blended with lubricant and any desired colorants. The input materials are thoroughly mixed and blended in hopper 15. The barrier polymer input to extruder 12 preferably is one or more passive high gas barrier plastic resins selected from the group consisting of EVOH, nylon, acrylonitrile copolymers such as styrene acrylonitrile and acrylonitrile methylacrylate, blends of EVOH and amorphous nylon, nanocomposites of clay in EVOH or nylon, blends of EVOH and an ionomer, acrylonitrile, cyclic olefin copolymers, and blends thereof. Alternatively, or in addition to the passive barrier resin, the input to extruder 12 may comprise an active oxygen scavenging barrier polymer, such as nylon blended with a cobalt salt. The matrix polymer input to extruder 14 preferably is selected from the group consisting of polyolefins, polyesters, polyamides and styrene-based polymers. Polypropylene resins are particularly preferred. The compatibilizer input to extruder 14 preferably is selected from the group consisting of maleic anhydride grafted polymers, ethylene vinyl acetate grafted polymers, ethylene methyl acrylate, ionomers, carboxylic acid grafted or modified polymers, and blends thereof. As noted above, a lubricant selected from the group consisting of fatty acid esters, glycols, waxes, primary amides, secondary amides, secondary bis-amides and blends thereof, may be pre-blended with the matrix polymer.

The relative percentages of the barrier polymer, the matrix polymer and the compatibilizer material depend upon the thicknesses of the respective layers formed at stages 16, 18, which in turn depend upon the extrusion flow rates at extruders 12, 14. The blend input to extruder 14 and the relative rates of extrusion preferably are such that the barrier material in the final closure is in an amount within the range of about 2 % to 50 % by weight. Most preferably, the amount of barrier polymer in the final output 20 preferably is in the range of about 6% to 35% by weight, the compatibilizer material preferably is in the range of about 1% to 20% by weight, with the balance consisting of the matrix polymer. Increase in the percentage of the barrier material increases the cost of the resulting closure. The amount of compatiblizer material is selected to achieve a desirable amount of bonding between the layers, and to tailor the viscosity of the matrix polymer with which the compatibilizer is blended. It is to be noted in this respect that blending of the compatibilizer with the matrix polymer prior to extrusion eliminates a third extruder that would otherwise be necessary, and also permits the compatibilizer to be employed for tailoring the viscosity of the matrix polymer. It is considered desirable that the melt flow rates of the extrudates input to layer generation stage 16 be as closely matched as possible. Material melt flow rates are published by material manufactures, and can be employed in selecting suitable materials. The viscosities of the separate feed streams must be adequately matched to provide proper layer formation. As taught in U.S. Patent 5,628,950, the melt viscosity difference between the materials of the different layers should be no greater than a factor of five to provide proper layer formation.

FIG. 3 illustrates closure 28 as comprising a base wall 30 from which a peripheral skirt 32 integrally extends. Skirt 32 has internal means, such as an internal thread 34, for securing closure 28 to the finish 36 of a container 38. Closure 28 also preferably includes a tamper-indicating element 40 for indicating potential tampering with the package formed by closure 28 and container 38. Tamper-indicating element 40 may comprise a band frangibly connected to skirt 32 and separable therefrom upon removal of closure 28 from container 38, as disclosed in U.S. Patent 5,755,347 or Re 33,265. Alternatively, tamper-indicating element 40 may be of a type that is frangibly coupled to but remains connected to closure 28 upon removal of the closure from container 38, as illustrated for example in U.S. Patent 5,295,600. An annular lip or ledge 42 is molded integrally with base wall 30 at a position for self-sealing engagement with the inside diameter of container finish 36 for sealing engagement therewith. Alternatively, sealing element 42 may be of the type illustrated in U.S. Patent 5,320,236. Closure 28 illustrated in FIG. 3 thus comprises a so-called linerless closure.

As illustrated in FIG. 4, at least the base wall 30 of closure 28, and preferably also the skirt 32, consists essentially of a multiplicity of layers 43 of matrix polymer material alternating with a multiplicity of layers 44 of barrier material to resist transmission of gases, water vapor and flavorants through the closure. The top and bottom layers preferably consist of matrix materials layers 43. This layered morphology has been shown to provide better barrier properties than conventional material blends. The technique of the present invention can also be used to add a decorative effect by using different colors in each layer. Upon compression molding, the closure will have a random swirl appearance that cannot be achieved employing conventional technology. The number of layers depends upon the construction of layer multiplication generation device 16 and layer multiplication device 18. The number of layers is selected to achieve desired barriers and other properties. The number of layers preferably is at least nine, more preferably at least thirty-three, and most preferably a least one hundred twenty-nine.

A particularly important advantage of the present invention lies in the fact that barrier properties to migration of gases through the closure can be obtained without providing a separate closure liner. However, it is also contemplated in accordance with the present invention that a liner can be provided on the interior surface of closure base wall 30 for sealing engagement with the container finish and/or improved barrier properties. FIG. 5 illustrates a liner 46 that has a thickened periphery for opposed abutment with the sealing surface of a container, while FIG. 6 illustrates a liner 46a of flat geometry. FIG. 7 illustrates a liner 46b having a flat periphery and a thickened midsection for holding additional barrier material. Liner 46, 46a or 46b may be compression molded in situ as illustrated in U.S. Patents 3,674,393, 3,702,148, 3,877,497, 4,518,336 and 5,451,360. Alternatively, but less preferably, the liner may be separately formed and then mechanically or adhesively secured within the closure against the base wall. Liner 46, 46a, 46b may be as disclosed in U.S. Patent 4,984,703, or may be as disclosed in copending U.S. Application Serial No. 08/997,871 or 08/998,072 for enhanced barrier properties.

FIG. 8 illustrates a currently preferred closure construction manufactured using the system of FIG. 2. There are separate matrix, compatibilizer and barrier polymer layers 50, 52, 54. The sequence 50, 52, 54, 52, 50, etc. is repeated through the thickness of the closure. Abutting matrix polymer layers 50 tend to flow together and form a matrix layer of double thickness. Layer thicknesses are not shown to scale in any figures. Compatibilizer layers 52 would typically be much thinner than the matrix or barrier layers. Although FIGS. 4 and 8 illustrate symmetrical layer constructions, asymmetrical constructions are also contemplated.

FIG. 9 illustrates a construction in which there are, in sequence, a matrix layer 50, a compatibilizer layer 52, a passive barrier layer 56, a compatibilizer layer 58 (which may be the same composition as layer 52), an active barrier layer 60, a compatibilizer layer 52 and a matrix layer 50. This sequence is repeated through the thickness of the closure. Again, abutting or facing matrix layers 50 tend to flow together. Use of both active and passive barrier layers provides enhanced barrier properties. It is also contemplated that the active and passive polymers may be blended within a single layer, such as a blend of EVOH, nylon and cobalt salt.

It is preferable that the multiple layers that characterize the present invention each be of substantially uniform thickness, although this is not critical because of the multiplicity of layers. It is also preferred that each layer be of uniform composition. It is anticipated that additional layers of other materials exhibiting other desired properties may be employed in certain applications. In manufacture of closures of multi-layer construction, layer orientation in the charge pellet is not critical. This is believed to be due to the fact that the heat and pressure of the compression molding operation causes flow of the layered material radially outwardly so as to reconfigure the layered construction of the pellet even though the layers initially may have been at an angle to the final closure base wall. It is believed that, as long as there is a sufficient number of layers in the extruded pellet and the final closure, the barrier properties of the closure will be achieved without regard to orientation of the layers prior to molding.

There have thus been disclosed a closure and a method of manufacture that fully satisfy the objectives and aims previously set forth. The closure is readily manufactured from otherwise conventional materials and employing otherwise conventional techniques and equipment. The closure provides improved efficiency, in terms of the quantity of barrier material employed versus permeation and transmission of gases such as oxygen and carbon dioxide, water vapor, and essential flavor oils (flavor scalping). Specific matrix/barrier combinations have been disclosed. Other combinations are envisioned for different applications, and will suggest themselves to persons of ordinary skill in the art based upon the principles and parameters herein discussed.

## Claims

1. A plastic closure that comprises a closure body having a base wall (30) and a peripheral skirt (32) with means (34) on the skirt for securing the closure to a container, **characterized in that** at least said base wall comprising a blend of montmorillonite clay particles and plastic resin.

2. The closure set forth in claim 1 wherein said plastic resin is selected from the group consisting of EVOH, nylon and blends of EVOH and nylon.

3. The closure set forth in claim 2 wherein said nylon is amorphous or semicrystalline nylon.

4. The closure set forth in any one of claims 1 -3 wherein said base wall comprises a multilayer plastic structure in which said blend is disposed in layers between alternating layers of matrix polymer material.
